# EUROPÄISCHE PATENTSCHRIFT

(11) **EP 2 167 354 B1**
(45) Veröffentlichungstag und Bekanntmachung des Hinweises auf die Patenterteilung: **25.01.2012**
(21) Anmeldenummer: 08759758.9
(22) Anmeldetag: 20.05.2008
(51) Int. Cl.: B60S 1/58

(54) **BEFESTIGUNGSANORDNUNG**
FASTENING ARRANGEMENT
DISPOSITIF DE FIXATION

(30) Priorität: 20.07.2007 DE 102007034028
(43) Veröffentlichungstag der Anmeldung: 31.03.2010
(73) Patentinhaber: Robert Bosch GmbH, 70442 Stuttgart (DE)
(72) Erfinder: REITH, Michael, 77815 Buehl-Vimbuch (DE); ALBRECHT, Gerard, F-67690 Hatten (FR)
(86) Internationale Anmeldenummer: PCT/EP2008/056138
(87) Internationale Veröffentlichungsnummer: WO 2009/013039

(56) Entgegenhaltungen:
- EP-A- 0 715 086
- DE-A1- 19 809 630
- DE-A1-102004 010 513
- FR-A- 2 847 959

## Beschreibung

Die vorliegende Erfindung betrifft eine Scheibenwischervorrichtung insbesondere für Heckenscheibenwischer eines Kraftfahrzeuges mit einem Wischerantrieb und einer Befestigungsanordnung zur Befestigung des Wischerantriebes an einer Fahrzeugkarosserie des Kraftfahrzeuges, wobei die Befestigungsvorrichtung ein Befestigungsstück aufweist, an dem ein Entkopplungselement zur Aufnahme und Dämpfung von Schwingungen vorgesehen ist, welches mit mindestens einer Befestigungsstelle zur kraft- und/oder formschlüssigen Befestigung des Wischerantriebs an dem Befestigungsstück versehen ist.

### Stand der Technik

Scheibenwischervorrichtungen der oben genannten Art sind allgemein bekannt und beispielsweise in der DE 101 61 976 A1 oder DE-A-102004010513 beschrieben. Dieses Dokument zeigt eine Befestigungsanordnung bei der der Wischerantrieb mittels eines in die zentrale Bohrung eines gummielastischen Befestigungselementes eingesetzten Befestigungszapfens an der Fahrzeugkarosserie befestigt ist. Zwar wird bei dieser Ausführungsform der Wischerantrieb erfolgreich von den über die Karosserie auf das Befestigungselement übertragenen Schwingungen entkoppelt, so dass keine nachteilige Geräuschentwicklung mehr im Fahrzeuginnenraum hörbar ist, jedoch ist durch die Wahl der Dicke des Entkopplungselmentes bzw. der Länge des Befestigungszapfens die Dicke der Fahrzeugkarosserie bereits zwingend vorgegeben.

Bei einem Fahrzeug, welches beispielsweise mit zwei Heckscheibenvarianten ausgeliefert wird, wie beispielsweise einer separat zu öffnenden Heckscheibe und einer fest in der Karosserie verankerten Heckscheibe, muß immer der gleiche Wischerarmbefestigungspunkt, auch Konuspunkt genannt, realisiert werden, um eine störungsfreie Betätigung des Heckscheibenwischers zu ermöglichen. Bei der Heckscheibenvariante mit der separat zu öffnenden Heckscheibe ist es dabei notwendig, die Mechanik und insbesondere den Wischerantrieb der Scheibenwischervorrichtung direkt an der zu öffnenden Klappe zu befestigen. Die Scheibenwischervorrichtung muß somit als kompakte Einheit vollständig an der Heckscheibe befestigt und mit ihr beim Öffnen angehoben und verschwenkt werden.

Im Gegensatz dazu ist es bei einer fest installierten Heckscheibe durchaus möglich, Teile der Scheibenwischervorrichtung in günstigere Positionen zu verlagern, so dass zum einen die Bauhöhe einer solchen Variante wesentlich kleiner gewählt werden kann und zum anderen bei der Betätigung der Klappe wesentlich weniger Gewicht mobilisiert und verschwenkt werden muß.

Um nun den gleichen Wischerarmbefestigungspunkt außerhalb der Karosserie realisieren zu können, wird im Stand der Technik entweder der Motorabtrieb unterschiedlich lang ausgebildet oder es gibt für die beiden Heckscheibenvarianten unterschiedliche Befestigungspakete für die jeweilige Scheibenwischervorrichtung. Die Heckscheibenpakete unterscheiden sich unter anderem darin, dass der Befestigungszapfen entsprechend der notwendigen Dickenanpassung des gummielastischen Befestigungselementes an die veränderte Bauhöhe länger oder kürzer ausgeführt werden muß.

Jede einzelne der vorgeschlagenen Möglichkeiten beinhaltet den Nachteil, dass für die verschiedenen Heckscheibenvarianten unterschiedliche Bauteile notwendig sind, was mit einer erhöhten Teilevielfalt und damit mit erhöhten Material- und Herstellungskosten einhergeht.

Es ist daher Aufgabe der vorliegenden Erfindung, eine Möglichkeit der Befestigung der Scheibenwischervorrichtung bereitzustellen, die eine möglichst geringe Teilevielfalt bereitstellt.

### Offenbarung der Erfindung

Diese Aufgabe wird erfindungsgemäß dadurch gelöst, dass die Befestigungsstelle beabstandet von der axialen Mitte des Befestigungsstückes angeordnet ist und das Befestigungsstück in mindestens ein axiales Teilstück unterteilt, dessen Länge einer Bauhöhendifferenz zwei verschiedenartiger zu befestigender Wischerantriebe entspricht.

Mit anderen Worten wird eine Befestigungsanordnung bereitgestellt, die so ausgebildet ist, dass durch einfaches Drehen des Befestigungsstückes um eine Achse senkrecht zu dessen Rotationsachse eine Bauhöhendifferenz zweier unterschiedlicher Ausführungsformen von Wischerantrieben ausgeglichen werden kann.

Es ist auch möglich, die Befestigungsstelle an dem Befestigungsstück so vorzusehen, dass in einer Einbaurichtung des Befestigungsstückes durch das axiale Teilstück ein Abstand zwischen der Fahrzeugkarosserie und der Befestigungsstelle einstellbar ist, der der notwendigen Bauhöhe des einzusetzenden Wischerantriebes entspricht. Dies kann beispielsweise die Bauhöhe für einen Wischerantrieb für eine Heckklappe eines Fahrzeuges mit fest installiertem Heckscheibenfenster sein. Soll hingegen eine Scheibenwischervorrichtung mit der gleichen Befestigungsanordnung wie im vorangegangenen Ausführungsbeispiel an eine Heckklappe eines Fahrzeuges angebracht werden, dessen Heckscheibe separat und unabhängig von der Heckklappe geöffnet werden kann, so ist es notwendig, die Scheibenwischervorrichtung vollständig an der Heckscheibe zu befestigen, was mit der Notwendigkeit einer größeren Bauhöhe einhergeht.

Um nun einen gleichen Bausatz der Befestigungsanordnung für beide Ausführungsformen von Heckklappen benutzen zu können, wird erfindungsgemäß vorgesehen, zum Einbau der Scheibenwischervorrichtung direkt an der Heckscheibe das Befestigungsstück einfach umzudrehen, so dass das axiale Teilstück, welches im ersten Einbaufall das von der Karosserie abgewandte Teilstück bildet, nunmehr den Abstand der Befestigungsstelle zur Fahrzeugkarosserie definiert. Dadurch, dass dieses axiale Teilstück durch die Befestigungsstelle derart unterteilt wurde, dass seine der Bauhöhe des zweiten, direkt an der Heckscheibe zu befestigenden Wischerantriebes entspricht, ist eine besonders einfache Art der Befestigung des Wischerantriebes an der Heckscheibe des Kraftfahrzeuges bei gleichzeitiger Anpassung an verschiedene Bauhöhen der zu befestigenden Wischerantriebe gewährleistet.

Es ist nicht mehr notwendig, zur Befestigung eines anderen Wischerantriebstyps eine separate Befestigungsanordnung mit anderen an die zweite Ausführungsform des Wischerantriebs angepaßten Abmessungen in das Fahrzeug einzubauen. Dies verringert vorteilhafterweise sowohl die Teilevielfalt und damit auch die Fertigungs- und Montagekosten.

Ein Ausführungsform der vorliegenden Erfindung sieht vor, das Befestigungsstück aus einer Distanzbuchse mit einem Distanzbuchsenbund und einem Distanzbuchsenschaft zu bilden, wobei das Entkopplungselement zur Dämpfung von Schwingungen auf den Distanzbuchsenschaft aufschiebbar ist. Je nach Ausbildung des Entkopplungselementes und nach Anordnung der Befestigungsstelle an dem Entkopplungselement kann in diesem Ausführungsbeispiel die Bauhöhendifferenz durch die Dicke des Distanzbuchsenbundes gebildet werden. Dies kann der Fall sein, wenn die Befestigungsstelle im axialen Zentrum des Entkopplungselementes vorgesehen ist. Allerdings sind in diesem Ausführungsbeispiel lediglich zwei unterschiedliche Bauhöhen durch ein und dasselbe Bauteil realisierbar.

In einem weiteren Ausführungsbeispiel ist die Befestigungsstelle derart beabstandet von der axialen Mitte des Entkopplungselements vorgesehen, dass sie das Entkopplungselement in mindestens ein axiales Teilstück unterteilt, dessen Länge einem Bauhöhenunterschied mindestens eines weiteren zu befestigenden Wischerantriebs mit einer weiteren von den zuvorigen Wischernatrieben in der Bauhöhe verschiedenen entspricht. Mit anderen Worten ist auch hier durch einfaches Umdrehen des Entkopplungselementes und einem damit verbundenen Verschieben der Befestigungsstelle in axialer Richtung das Einstellen einer weiteren Bauhöhe, beispielsweise eines dritten Wischerantriebes, möglich.

Eine besonders flexible Anpassung des Abstandes der Befestigungsstelle zur Karosserie und damit der Einstellung der Bauhöhe des zu befestigenden Wischerantriebs wird bereitgestellt, wenn das Entkopplungselement zur Anpassung austauschbar ausgebildet ist. Zur Einstellung bzw. Anpassung des Befestigungsstückes an eine bestimmte Bauhöhe eines einzusetzenden weiteren Wischerantriebes kann ein Entkopplungselement einfach auf den Distanzbuchsenschaft aufgeschoben werden, an dem die Befestigungsstelle des Wischerantriebes so angeordnet ist, dass der Abstand zwischen Karosserie und Befestigungsstelle in axialer Richtung der Distanzbuchse der Bauhöhe des Wischerantriebes entspricht. Somit ist aufgrund der unterschiedlichen Anordnung der Befestigungsstelle in axialer Richtung und der damit verbundenen Skalierbarkeit des Abstandes zwischen Karosserie und Befestigungsstelle jede gewünschte Bauhöhe über die Befestigungsanordnung realisierbar.

Um ein axiales Verschieben oder ungewollten Lösen des Entkopplungselementes von dem Distanzbuchsenschaft in axialer Richtung zu vermeiden, ist in einem Ausführungsbeispiel mindestens ein Befestigungsmittel, insbesondere eine Befestigungsnase an dem Distanzbuchsenschaft, vorgesehen.

Das Entkopplungselement kann in einem Ausfühntngsbeispiel mit einem Überstand über den Distanzbuchsenschaft herausragen und die Anschlagfläche zum Distanzbuchsenbund radial überdecken. Durch den Überstand und die Überdeckung ist das Entkopplungselement in axialer und radialer Richtung durch einen dadurch hervorgerufenen Formschluß zusätzlich gesichert. Wird in axialer Richtung eine Überdeckung von wenigen Millimetern gewählt, so kann das Entkopplungselement auf einfache Weise gegebenenfalls auch automatisiert auf den Distanzbuchsenschaft montiert werden. Das Entkopplungselement kann vorteilhafterweise aus einem elastomeren, schwingsungsdämpfenden Material gebildet sein.

Eine weitere Möglichkeit der Sicherung gegen ein axiales Verschieben des Entkopplungselementes kann durch Vorsehen eines Anschlages an dem freien Ende des Distanzbuchsenschaftes erreicht werden. Dadurch wird erreicht, dass der Wischerantrieb auch dann noch gegen ein Abrutschen von dem Befestigungstück gesichert ist, wenn das Entkopplungselement beispielsweise durch Altern oder Verschleiß oder andere Arten der Beschädigung seine Funktionsfähigkeit verliert. Der Anschlag kann in der Form einer runden oder rechteckigen Scheibe ausgeführt sein und separat montierbar insbesondere aufschraubbar oder einsteckbar und durch Rastelemente an der Distanzbuchse fixierbar sein. Natürlich sind sämtliche anderen im Stand der Technik bekannten Befestigungsarten zur Befestigung des Anschlages an der Distanzbuchse ebenfalls verwendbar.

Eine Möglichkeit der Befestigung des Entkopplungselementes an den Distanzbuchsenschaft kann durch Aufschrumpfung erfolgen. Dies hat zum Vorteil, dass bei dieser Art von Befestigung ein axiales Verrutschen des Entkopplungselementes stark vermindert wird.

Eine weitere Sicherung gegen ein Abrutschen oder Verrutschen des Entkopplungselementes ist gegeben, wenn der Distanzbuchsenschaft in dem Montagebereich des Entkopplungselementes wellenartige Vorsprünge aufweist.

Hinsichtlich weiterer vorteilhafter Ausführungsformen der vorliegenden Erfindung wird auf die Unteransprüche sowie die nachfolgende Beschreibung eines Ausführungsbeispieles anhand der beiliegenden Zeichnung verwiesen.

### Ausführungsbeispiel

Es zeigt:
- Figur 1a, 1b: eine schematische Darstellung einer erfindungsgemäßen Befestigungsanordnung mit einem Befestigungsstück in zwei verschiedenen Montagelagen; und
- Figur 2a, 2b: eine schematische Darstellung einer erfmdungsgemäßen Befestigungsanordnung mit zwei verschiedenen Entkopplungselementen.

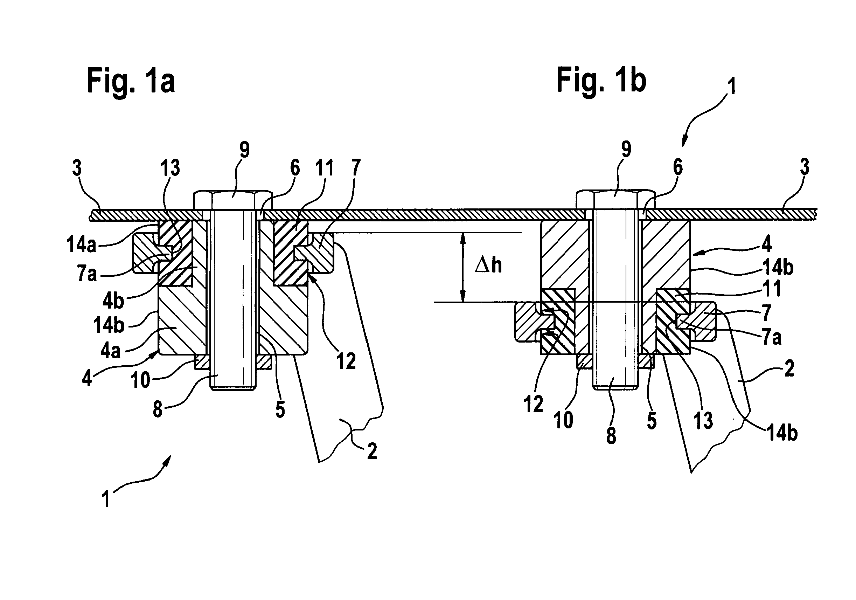

Die Figur 1 zeigt eine Befestigungsanordnung 1 für eine Scheibenwischervorrichtung, insbesondere für Heckscheibenwischer eines Kraftfahrzeuges.

Die Befestigungsanordnung 1 weist zur Befestigung eines Wischerantriebes 2 an der Fahrzeugkarosserie 3 des Kraftfahrzeuges ein Befestigungsstück 4 auf, welches über einen durch eine zentrale Durchgangsöffnung 5 in dem Befestigungsstück 4 sowie eine Öffnung 6 in der Fahrzeugkarosserie 3 geführten Befestigungszapfen 8 an der Fahrzeugkarosserie 3 befestigt ist. Der Befestigungszapfen stützt sich dazu einerseits mit einem angeformten Bund 9 an der Fahrzeugkarosserie ab, während das gegenüberliegende Ende in der Form eines Anschlages 10, hier in der Form einer Sachraubenmutter, mit dem Befestigungsstück 4 in Verbindung steht. Das Befestigungsstück 4 ist in der Form einer Distanzbuchse mit einem Distanzbuchsenbund 4a und einem Distanzbuchsenschaft 4b ausgebildet.

Auf den Distanzbuchsenschaft 4b ist ein Entkopplungselement 11 aufgeschoben, wodurch von der Fahrzeugkarosserie 3 erzeugte Schwingungen nur gedämpft auf den Wischerantrieb 2 übertragen werden oder sogar nahezu vollständig vom Entkopplungselement 11 aufgenommen werden.

Das Entkopplungselement 11 ist mit einer Befestigungsstelle 12 zur Befestigung des Wischerantriebes 2 versehen. Die Befestigungsstelle 12 ist in diesem Ausführungsbeispiel durch eine in das Entkopplungselement 11 eingebrachte umlaufende Nut 13 gebildet, in die ein an dem Befestigungsfuß 7 des Wischerantrieb 2 ausgebildeter Vorsprung 7a formschlüssig eingreift.

Zusätzlich zu der formschlüssigen Befestigung weist das Entkopplungselement 11 einen Außendurchmesser auf, der um wenige Millimeter größer ist als der Innendurchmesser des Befestigungsfußes 7, so dass sich aufgrund der Elastizität des Entkopplungselementes 11 im Berührungsbereich zwischen Entkopplungselement 11 und dem Befestigungsfuß 7 des Wischerantriebes 2 neben dem formschlüssigen Eingriff eine kraftschlüssige Verbindung einstellt.

Die Befestigungsstelle 12 des Wischerantriebes 2 unterteilt das Befestigungsstück 4 in zwei axiale Teilstücke 14a, 14b. Das axiale Teilstück 14a weist dabei eine Länge auf, die einer Bauhöhe eines ersten einzusetzenden Wischerantriebes entspricht, das axiale Teilstück 14b weist hingegen eine Länge auf, die einer Bauhöhe eines zweiten Wischerantriebes entspricht, die in diesem Ausführungsbeispiel größer ist als die Bauhöhe des ersten Wischerantriebes.

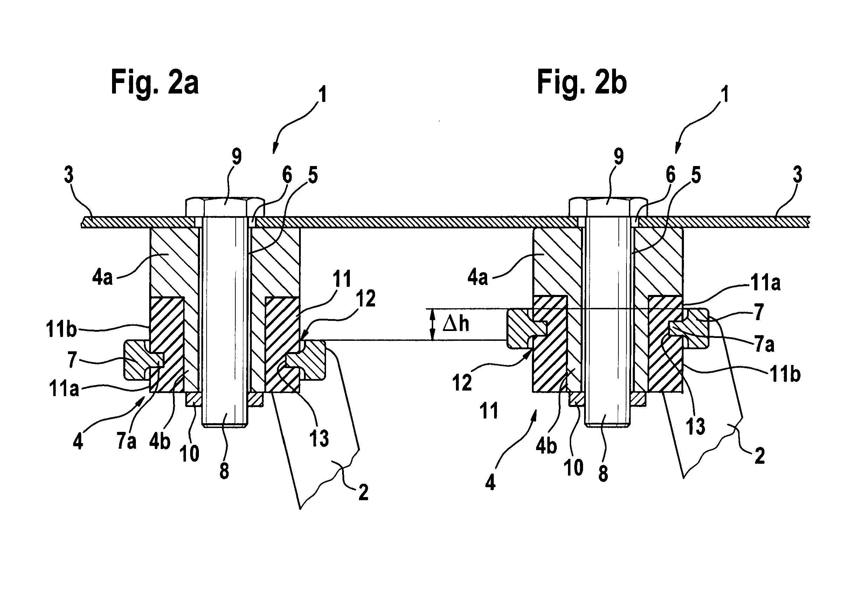

In dem in den Figuren 1a und 1b gezeigten Ausführungsbeispiel ist die Befestigungsstelle 12 im axialen Zentrum des Entkopplungselementes 11 angeordnet. In einem weiteren in den Figuren 2a und 2b dargestellten Ausführungsbeispiel ist die Befestigungsstelle 12 hingegen derart angeordnet, dass sie auch das Entkopplungselement 11 selbst in mindestens ein axiales Teilstück 11 a, 11 b unterteilt, dessen Länge einem Bauhöhenunterschied mindestens eines weiteren zu befestigenden Wischerantriebes 2 entspricht. Dadurch wird gewährleistet, dass durch einfaches Drehen des Entkopplungselementes 11, was mit einem Wechsel der Einbaurichtung gleichzusetzen ist, eine weitere Bauhöhe für einen dritten Wischerantrieb einstellbar ist.

Eine weitere Möglichkeit der Einstellung verschiedener Bauhöhen für unterschiedliche Typen von Wischerantrieben 2 wird erreicht, indem das Entkopplungselement 11 zur Anpassung des Befestigungsstückes 4 durch ein weiteres Entkopplungselement ersetzt wird, an dem die Befestigungsstelle 12 in axialer Richtung so angeordnet ist, dass der Abstand zwischen der Fahrzeugkarosserie 3 und der Befestigungsstelle 12 an dem Entkopplungselement 11 einer Bauhöhe eines einzubauenden Wischerantriebes 2 entspricht. Dadurch wird ermöglicht, für verschiedene Bauhöhen den Wischerarmbefestigungspunkt, auch Konuspunkt genannt, bei Beibehaltung der Abmessungen des Motorantriebes bzw. der Befestigungsanordnung 1 konstant zu halten. Weder der Befestigungszapfen 6 noch das Befestigungsstück 4 muß zum Einbau eines Wischerantriebes 2 mit unterschiedlicher Bauhöhe in seinen Dimensionen verändert werden. Es ist auch nicht notwendig, ein weiteres Distanzstück zum Ausgleich eines Bauhöhenunterschiedes in die Scheibenwischervorrichtung einzusetzen.

## Patentansprüche

1. Scheibenwischervorrichtung, insbesondere für Heckscheibenwischer eines Kraftfahrzeuges, mit einem Wischerantrieb (2) und einer Befestigungsanordnung (1) zur Befestigung eines Wischerantriebes (2) an einer Fahrzeugkarosserie (3) des Kraftfahrzeuges, wobei die Befestigungsanordnung (1) ein Befestigungsstück (4) aufweist, an dem ein Entkopplungselement (11) zur Aufnahme und Dämpfung von Schwingungen mit mindestens einer Befestigungsstelle (12) zur Befestigung des Wischerantriebs (2) vorgesehen ist, **dadurch gekennzeichnet, dass** das Befestigungsstück (4) aus einer Distanzbuchse mit einem Distanzbuchsenbund (4a) und einem Distanzbuchsenschaft (4b) gebildet ist, wobei das Entkopplungselement (11) zur Dämpfung von Schwingungen auf den Distanzbuchsenschaft (4b) aufschiebbar ist und wobei die Befestigungsstelle beabstandet von der axialen Mitte des Befestigungsstücks (4) zu liegen kommt und eine Befestigungsebene definiert, welche das Befestigungsstück (4) in mindestens ein axiales Teilstück (14a, 14b) unterteilt, dessen Länge einer Bauhöhendifferenz zweier verschiedenartiger zu befestigender Wischerantriebe (2) entspricht, so dass durch Drehen des Befestigungsstückes um eine Achse senkrecht zu der Rotationsachse des Befestigungsstücks die Bauhöhendifferenz der zwei verschiedenartigen zu befestigenden Wischerantriebe ausgleichbar ist.

2. Scheibenwischervorrichtung nach Anspruch 1,
**dadurch gekennzeichnet, dass** die Befestigungsstelle (12) derart an dem Entkopplungselement (11) vorgesehen ist, dass sie das Entkopplungselement (11) in mindestens ein axiales Teilstück (11a, 11b) unterteilt, dessen Länge einem Bauhöhenunterschied mindestens eines weiteren zu befestigenden Wischerantriebes (2) entspricht.

3. Scheibenwischervorrichtung nach einem der vorhergehenden Ansprüche, **dadurch gekennzeichnet, dass** das Entkopplungselement (11) zur Anpassung des Befesbgungsstückes (4) an eine Bauhöhe des Wischerantriebes (2) austauschbar ist.

4. Scheibenwischervorrichtung nach einem der vorhergehenden Ansprüche, **dadurch gekennzeichnet, dass** das Entkopplungselement (11) mit mindestens einem Befestigungsmittel, insbesondere einer Befestigungsnase an dem Distanzbuchsenschaft (4b) gegen ein axiales Verschieben gesichert ist.

5. Scheibenwischervorrichtung nach einem der vorhergehenden Ansprüche, **dadurch gekennzeichnet, dass** das Entkopplungselement (11) mit einem Überstand über den Distanzbuchsenschaft (4b) herausragt und die Anschlagsfläche zum Distanzbuchsenbund (4a) radial überdeckt.

6. Scheibenwischervorrichtung nach einem der vorhergehenden Ansprüche, **dadurch gekennzeichnet, dass** der Distanzbuchsenschaft (4b) an seinem freien Ende einen Anschlag (10) aufweist, der das Entkopplungselement (11) stirnseitig überdeckt und vor einem axialen Verschieben sichert.

7. Scheibenwischervorrichtung nach einem der vorhergehenden Ansprüche, **dadurch gekennzeichnet, dass** das Entkopplungselement (11) aus einem elastomeren, schwingungs-dämpfenden Material gebildet ist.

8. Scheibenwischervorrichtung nach einem der vorhergehenden Ansprüche, **dadurch gekennzeichnet, dass** das Entkopplungselement (11) auf den Distanzbuchsenschaft (4b) aufgeschrumpft ist.

9. Scheibenwischervorrichtung nach einem der vorhergehenden Ansprüche, **dadurch gekennzeichnet, dass** der Distanzbuchsenschaft (4b) wellenartige Vorsprünge aufweist, um ein Abrutschen oder Verrutschen des Entkopplungselementes (11) zu verhindern.

## Claims

1. Window wiper device, in particular for rear window wipers of a motor vehicle, with a wiper drive (2) and a fastening arrangement (1) for fastening a wiper drive (2) to the motor vehicle bodywork (3), wherein the fastening arrangement (1) has a fastening piece (4) on which a decoupling element (11) for absorbing and damping vibrations is provided with at least one fastening point (12) for the fastening of the wiper drive (2), **characterized in that** the fastening piece (4) is formed from a spacer bushing with a spacer bushing collar (4a) and a spacer bushing stem (4b), the decoupling element (11) for damping vibrations being able to be pushed onto the spacer bushing stem (4b), and the fastening point coming to lie at a distance from the axial centre of the fastening piece (4) and defining a fastening plane which divides the fastening piece (4) into at least one axial subsection (14a, 14b), the length of which corresponds to an overall height difference between two different wiper drives (2) to be fastened, and therefore, by rotation of the fastening piece about an axis perpendicular to the axis of rotation of the fastening piece, the overall height difference between the two different wiper drives to be fastened can be compensated for.

2. Window wiper device according to Claim 1, **characterized in that** the fastening point (12) is provided on the decoupling element (11) in such a manner that it divides the decoupling element (11) into at least one axial subsection (11a, 11b), the length of which corresponds to an overall height difference of at least one further wiper drive (2) to be fastened.

3. Window wiper device according to one of the preceding claims, **characterized in that** the decoupling element (11) can be interchanged in order to adapt the fastening piece (4) to an overall height of the wiper drive (2).

4. Window wiper device according to one of the preceding claims, **characterized in that** the decoupling element (11) is secured on the spacer bushing stem (4b) against axial displacement by means of at least one fastening means, in particular a fastening lug.

5. Window wiper device according to one of the preceding claims, **characterized in that** the decoupling element (11) protrudes with an excess length beyond the spacer bushing stem (4b) and radially covers the stop surface to the spacer bushing collar (4a).

6. Window wiper device according to one of the preceding claims, **characterized in that** the free end of the spacer bushing stem (4b) has a stop (10) which covers the decoupling element (11) on the end side and secures the latter against axial displacement.

7. Window wiper device according to one of the preceding claims, **characterized in that** the decoupling element (11) is formed from an elastomeric, vibration-damping material.

8. Window wiper device according to one of the preceding claims, **characterized in that** the decoupling element (11) is shrunk onto the spacer bushing stem (4b).

9. Window wiper device according to one of the preceding claims, **characterized in that** the spacer bushing stem (4b) has wave-like projections in order to prevent the decoupling element (11) from slipping or slipping off.

## Revendications

1. Dispositif d'essuie-glace, notamment pour l'essuie-glace arrière d'un véhicule automobile, comprenant un entraînement d'essuie-glace (2) et un agencement de fixation (1) pour la fixation d'un entraînement d'essuie-glace (2) à une carrosserie de véhicule (3) du véhicule automobile, l'agencement de fixation (1) présentant une pièce de fixation (4) sur laquelle un élément de découplage (11) pour recevoir et amortir les vibrations est pourvu d'au moins un point de fixation (12) pour la fixation de l'entraînement d'essuie-glace (2), **caractérisé en ce que** la pièce de fixation (4) est formée d'une douille d'espacement avec un épaulement de douille d'espacement (4a) et une tige de douille d'espacement (4b), l'élément de découplage (11) pour l'amortissement de vibrations pouvant être poussé sur la tige de douille d'espacement (4b) et le point de fixation venant se placer à distance du centre axial de la pièce de fixation (4) et définissant un plan de fixation qui divise la pièce de fixation (4) en au moins une pièce partielle axiale (14a, 14b), dont la longueur correspond à une différence de hauteur de construction de deux entraînements d'essuie-glace (2) de types différents à fixer, de sorte que par rotation de la pièce de fixation autour d'un axe perpendiculaire à l'axe de rotation de la pièce de fixation, la différence de hauteur de construction des deux entraînements d'essuie-glace de types différents à fixer puisse être compensée.

2. Dispositif d'essuie-glace selon la revendication 1,
**caractérisé en ce que** le point de fixation (12) est prévu sur l'élément de découplage (11) de telle sorte qu'il divise l'élément de découplage (11) en au moins une pièce partielle axiale (11a, 11b) dont la longueur correspond à une différence de hauteur de construction d'au moins un autre entraînement d'essuie-glace (2) à fixer.

3. Dispositif d'essuie-glace selon l'une quelconque des revendications précédentes,
**caractérisé en ce que** l'élément de découplage (11) peut être interchangé pour l'adaptation d'une pièce de fixation (4) à une hauteur de construction de l'entraînement d'essuie-glace (2).

4. Dispositif d'essuie-glace selon l'une quelconque des revendications précédentes,
**caractérisé en ce que** l'élément de découplage (11) est fixé avec au moins un moyen de fixation, en particulier un ergot de fixation sur la tige de douille d'espacement (4b), contre un déplacement axial.

5. Dispositif d'essuie-glace selon l'une quelconque des revendications précédentes, **caractérisé en ce que** l'élément de découplage (11) fait saillie avec une projection au-delà de la tige de douille d'espacement (4b) et recouvre radialement la surface de butée vers l'épaulement de douille d'espacement (4a).

6. Dispositif d'essuie-glace selon l'une quelconque des revendications précédentes, **caractérisé en ce que** la tige de douille d'espacement (4b) présente à son extrémité libre une butée (10) qui recouvre l'élément de découplage (11) du côté frontal et qui le fixe contre un déplacement axial.

7. Dispositif d'essuie-glace selon l'une quelconque des revendications précédentes, **caractérisé en ce que** l'élément de découplage (11) est formé par un matériau élastomère amortissant les vibrations.

8. Dispositif d'essuie-glace selon l'une quelconque des revendications précédentes, **caractérisé en ce que** l'élément de découplage (11) est emmanché par frettage sur la tige de douille d'espacement (4b).

9. Dispositif d'essuie-glace selon l'une quelconque des revendications précédentes, **caractérisé en ce que** la tige de douille d'espacement (4b) présente des saillies de type ondulées, afin d'empêcher un glissement ou un décentrage de l'élément de découplage (11).
